# EUROPÄISCHE PATENTSCHRIFT

(11) **EP 3 138 384 B1**
(45) Veröffentlichungstag und Bekanntmachung des Hinweises auf die Patenterteilung: **08.05.2019**
(21) Anmeldenummer: 16174213.5
(22) Anmeldetag: 13.06.2016
(51) Int. Cl.: A01F 15/07

(54) **WICKELVORRICHTUNG FÜR EINE BALLENPRESSE UND BETRIEBSVERFAHREN DAFÜR**
WINDING DEVICE FOR A BALER AND METHOD OF OPERATING THE SAME
DISPOSITIF D'ENROULEMENT POUR UNE PRESSE A BALLES ET SON PROCEDE DE FONCTIONNEMENT

(30) Priorität: 07.09.2015 DE 102015011447
(43) Veröffentlichungstag der Anmeldung: 08.03.2017
(73) Patentinhaber: Usines Claas France S.A.S, 57140 St. Rémy / Woippy (FR)
(72) Erfinder: Cazaban-Mazerolles, Benoit, 57070 Chieulles (FR); Waechter, Julien, 57640 Failly (FR); Wucher, Renaud, 54320 Maxeville (FR)
(74) Vertreter: CLAAS Gruppe

(56) Entgegenhaltungen:
- EP-A1- 1 502 494
- EP-A2- 2 052 597
- DE-A1-102005 005 650
- GB-A- 2 249 077

## Beschreibung

Die vorliegende Erfindung betrifft eine Wickelvorrichtung für eine Ballenpresse und ein Verfahren zum Betrieb zu deren Betrieb. Eine bekannte Wickelvorrichtung umfasst einen Wickeltisch zum Tragen eines zu umwickelnden Ballens, einen Wickelbahnspender, der auf einem um einen von dem Wickeltisch getragenen Ballen herum verlaufenden Weg geführt ist, und eine Klemmeinrichtung zum Fixieren der Wickelbahn, die einen ersten und einen zweiten Klemmbalken umfasst. Der zweite Klemmbalken ist zwischen einer - im Folgenden auch als Klemmstellung bezeichneten - Anschlagstellung, in der er durch einen Hydraulikzylinder gegen den ersten Klemmbalken beaufschlagt und in der Lage ist, die Wickelbahn zwischen den Klemmbalken zu fixieren, und einer zweiten Anschlagstellung bewegbar, in der der zweite Klemmbalken den Weg der Wickelbahn kreuzt und in der Lage ist, diese durch Bewegen in die erste Anschlagstellung von neuem zu fixieren. Eine derartige Wickelvorrichtung mit Klemmeinrichtung ist beispielsweise aus der EP 1 502 494 A1 bekannt.

Jeweils kurz nach Beginn des Umwickelns eines Ballens muss der zweite Klemmbalken vom ersten Klemmbalken abgerückt werden, um ein in der Klemmeinrichtung festgehaltenes Ende der Wickelbahn freizugeben. Einerseits muss die Bewegung des zweiten Klemmbalkens weit genug sein, um die Klemmung der Wickelbahn sicher aufzuheben, andererseits darf die Bewegung des zweiten Klemmbalkens keinesfalls den Weg der Wickelbahn kreuzen, die gleichzeitig vom Spender ab- und auf den Ballen aufgewickelt wird, da eine Beschädigung dieser Wickelbahn durch den Klemmbalken zur Undichtigkeit der Umhüllung des Ballens oder zu mangelhaftem Zusammenhalt der Umhüllung führen könnte.

Aufgabe der Erfindung ist, eine Wickelvorrichtung für eine Ballenpresse mit einfachem Aufbau und verbesserter Betriebssicherheit zu schaffen.

Die Aufgabe wird zum einen gelöst, indem bei einer Wickelvorrichtung der eingangs beschriebenen Art in der ersten Anschlagstellung das Stellglied drucklos schaltbar ist, um eine Bewegung des zweiten Klemmbalkens zu ermöglichen, durch die das geklemmte Ende der Wickelbahn freigegeben wird, und der zweite Klemmbalken (30) in einer Zwischenstellung zwischen erster und zweiter Anschlagstellung arretierbar ist, um so zu verhindern, dass der zweite Klemmbalken den Weg der Wickelbahn kreuzt, die gerade um den Ballen gewickelt wird. Wenn das Stellglied drucklos geschaltet ist, liegt die Wickelbahn im Wesentlichen ungeklemmt zwischen den Klemmbalken, so dass sie bei einer Bewegung des Ballens aus dem Spalt zwischen den Klemmbalken herausgleitet.

Unter Arretierung ist im Sinne der Erfindung nicht zu verstehen, dass jegliche Bewegung des zweiten Klemmbalkens unterbunden wäre; vielmehr kann eine Bewegung des zweiten Klemmbalkens innerhalb eines Toleranzbereichs möglich sein, ohne die Zwischenstellung zu verlassen; lediglich eine Bewegung des zweiten Klemmbalkens über die Grenzen dieses Toleranzbereichs hinaus in Richtung der Anschlagstellungen begegnet einem Widerstand oder einer Rückstellkraft.

Um die Bewegung des zweiten Klemmbalkens zu steuern, ist eine Ventilanordnung vorgesehen, die zwischen einer Konfiguration, in der eine erste Arbeitskammer des Stellgliedes mit einem Auslassanschluss einer Pumpe und eine zweite Arbeitskammer des Stellgliedes mit einem Einlassanschluss der Pumpe verbunden ist und das Stellglied den zweiten Klemmbalken entsprechend der von der Pumpe geförderten Menge an Hydraulikfluid bewegt, einer Konfiguration, in der die Arbeitskammern miteinander verbunden und von wenigstens einem der Anschlüsse der Pumpe getrennt sind und eine freie, nicht von der Pumpe angetriebene Bewegung des zweiten Klemmbalkens möglich ist, und einer Konfiguration umschaltbar ist, in der wenigstens eine der Arbeitskammern dicht verschlossen und das Stellglied dadurch arretiert ist.

Die Klemmeinrichtung kann eine erste Feder umfassen, die einer Bewegung des zweiten Klemmbalkens in die zweite Anschlagstellung eine erste Rückstellkraft entgegensetzt. Wenn dem ersten Klemmbalken in seiner ersten Anschlagstellung ein Antriebsstoß versetzt wird, der ihn in Richtung der zweiten Anschlagstellung treibt, dann sorgt die Feder dafür, dass die Auslenkung des zweiten Klemmbalkens begrenzt bleibt, so dass dieser zwar weit genug vom ersten Klemmbalken gelöst werden kann, um ein dazwischen geklemmtes Ende der Wickelbahn freizugeben, gleichzeitig aber die Auslenkung des zweiten Klemmbalkens in Richtung der zweiten Anschlagstellung so stark begrenzt wird, dass entweder ein Bereich, in dem er den Weg der Wickelbahn vom Spender zum Ballen kreuzen kann, gar nicht erreicht wird oder die Verweildauer in diesem Bereich so kurz ist, dass Wickelbahn und Klemmbalken nicht miteinander in Kontakt kommen. Der zweite Klemmbalken ist in der Zwischenstellung durch eine oder mehrere Federn arretierbar, beispielsweise durch die erste Feder. Ebenfalls ist denkbar, dass der zweite Klemmbalken durch mehrere einander entgegen wirkende Federn, arretierbar ist, wobei die Zwischenstellung eine Stellung ist, in der die Kräfte der Federn miteinander im Gleichgewicht sind oder ein Bereich ist, in dem der zweite Klemmbalken zwischen den entspannten Federn bewegbar ist.

Die zweite Anschlagstellung sollte eine Fangstellung sein, in der wenigstens der zweite Klemmbalken in einen Zwischenraum zwischen dem Weg des Wickelbahnspenders und dem Ballen eingreift, um die Wickelbahn einfangen und gegen den ersten Klemmbalken drücken zu können.

Wenn besagter Zwischenraum zwischen dem Weg des Wickelbahnspenders und dem Ballen als durch diejenigen zwei Ebenen begrenzt angenommen wird, in denen zwei entgegengesetzte Ränder der Wickelbahn während des Umwickelns des Ballens umlaufen, dann sollten die Klemmbalken sich in der Fangstellung über den gesamten Zwischenraum zwischen den zwei Ebenen erstrecken, um die Wickelbahn auf ihrer ganzen Breite einfangen zu können.

Die Kraft, die den zweiten Klemmbalken aus der ersten Anschlagstellung bzw. Klemmstellung forttreibt, kann durch das Stellglied erzeugt sein. Einer bevorzugten Ausgestaltung zu Folge jedoch ist diese Kraft die Rückstellkraft einer zweiten Feder.

Wenn das Stellglied drucklos ist, bestimmen die Federn die Stellung wenigstens des zweiten Klemmbalkens. Vorzugsweise ist bei drucklosem Stellglied die Klemmeinrichtung durch die Federn in einer Gleichgewichtsstellung zwischen der ersten und der zweiten Anschlagstellung gehalten, in der die Klemmbalken sich außerhalb des Zwischenraums zwischen dem Weg des Spenders und dem Ballen befinden. Die erste Feder verhindert somit, dass bei Wegfall des Drucks im Stellglied der zweite Klemmbalken bis in die zweite Anschlagstellung geschleudert wird und vermindert so die Gefährdung von Personal durch unvorhergesehene Bewegungen der Klemmeinrichtung bei Arbeiten an der Wickelvorrichtung. Außerdem kann, indem die Klemmbalken in Gleichgewichtsstellung außerhalb des Zwischenraums positioniert werden, sichergestellt werden, dass auch bei drucklosem Stellglied ein Wickelvorgang korrekt zu Ende gebracht werden kann.

Um die Klemmeinrichtung schnell aus der ersten Anschlagstellung fortzutreiben und so auch bei begrenztem Hub der Klemmbalken sicherzustellen, dass ein geklemmtes Ende der Wickelbahn sicher freigegeben wird, kann die zweite Feder eine höhere Federkonstante als die erste Feder aufweisen.

Insbesondere kann die zweite Feder geschützt in dem Stellglied untergebracht sein.

Die erste Feder sollte hingegen einen längeren Hub als die zweite Feder haben, um die Gleichgewichtsstellung des zweiten Klemmbalkens näher an der ersten als an der zweiten Anschlagstellung festzulegen.

Eine dritte Feder kann am ersten Klemmbalken so angreifen, dass in der ersten Anschlagstellung der erste Klemmbalken entgegen einer Rückstellkraft der dritten Feder ausgelenkt ist und die dritte Feder den zweiten Klemmbalken in Richtung der Zwischenstellung treibt, wenn das Stellglied drucklos geschaltet ist, wobei insbesondere die Ventilanordnung sich in der Konfiguration befinden kann, in der die Arbeitskammern miteinander verbunden sind.

Zum anderen wird die Aufgabe gelöst durch ein Verfahren zum Betreiben einer Wickelvorrichtung für eine Ballenpresse mit einem Wickeltisch, einem Wickelbahnspender und einer Klemmeinrichtung zum Fixieren der Wickelbahn, die einen ersten Klemmbalken und einen durch ein druckgetriebenes Stellglied angetriebenen zweiten Klemmbalken umfasst, mit den Schritten
a) Platzieren eines Ballens auf dem Wickeltisch;
b) Fixieren eines Endes einer Wickelbahn zwischen erstem und zweitem Klemmbalken der Klemmeinrichtung;
c) Führen des Wickelbahnspenders auf einem um den Ballen herum verlaufenden Weg, um ein Stück der Wickelbahn um den Ballen zu wickeln;
d) drucklos Schalten des Stellgliedes, um eine Bewegung des zweiten Klemmbalkens in eine Zwischenstellung zwischen erster und zweiter Anschlagstellung freizugeben, und
e) Arretieren des zweiten Klemmbalkens in der Zwischenstellung.

Eine oder mehrere Federn können den zweiten Klemmbalken in die Zwischenstellung schieben, wenn das Stellglied drucklos ist und deshalb der Kraft dieser Federn nicht mehr entgegenwirken kann.

Erfindungsgemäß erfolgt in Schritt e) die Arretierung des zweiten Klemmbalkens in der Zwischenstellung, indem wenigstens eine von zwei Arbeitskammern des Stellgliedes dicht verschlossen wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Längsschnitt durch eine Festkammer-Ballenpresse mit einer Wickelvorrichtung gemäß der vorliegenden Erfindung;
- Fig. 2: eine Draufsicht auf den Wickeltisch der Wickelvorrichtung während des Umwickelns eines Ballens;
- Fig. 3: eine Draufsicht auf den Wickeltisch gegen Ende des Umwickelns des Ballens;
- Fig. 4: eine Draufsicht auf den Wickeltisch mit an der Klemmeinrichtung geklemmten Wickelbahnen;
- Fig. 5: den Wickeltisch nach Absetzen des fertig umwickelten Ballens;
- Fig. 6: den Beginn des Wickelvorgangs an einem neuen Ballen;
- Fig. 7: eine schematische Darstellung der Klemmeinrichtung in der zweiten Anschlagstellung bzw. Fangstellung;
- Fig. 8: die Klemmeinrichtung in der Gleichgewichtsstellung; und
- Fig. 9: schematische Schnitte durch ein Stellglied der Klemmeinrichtung in Fang-, Ruhe- und Klemmstellung.

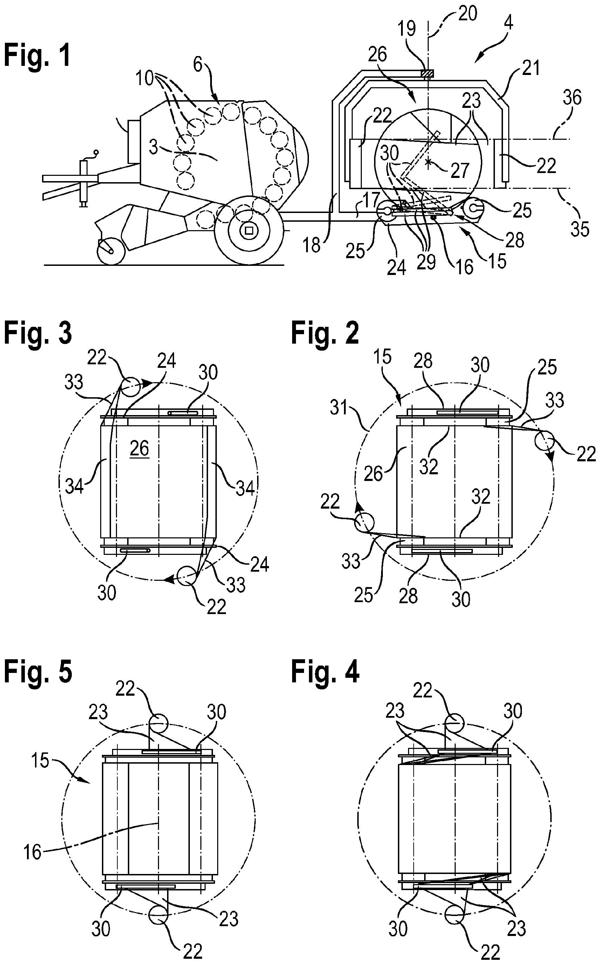

Fig. 1 zeigt eine Rundballenpresse gemäß einer Ausgestaltung der Erfindung in einem schematischen Schnitt. Eine Rundballenpresse kann eine variable oder feste Presskammer aufweisen. Auf einem an eine Zugmaschine anzukoppelnden Fahrgestell 1 sind von vorne nach hinten aufeinander folgend eine Erntegut-Aufnahme- (nicht zwingend!)einrichtung 2, eine Presskammer 3 und eine Ballenwickelvorrichtung 4 angeordnet.

Ein Gehäuse 6 der Presskammer 3 umfasst eine Vielzahl von Pressrollen 10, die sich auf einem Kreis rings um die Presskammer 3 verteilen. Durch eine Lücke 5 zwischen diesen Pressrollen 10 in einem vorderen Teil des Gehäuses 6 gelangt das zu pressende Erntegut von der Aufnahme- und Zerkleinerungsvorrichtung 2 in die Presskammer 3. In einem hinteren Teil des Gehäuses 6 sind die Pressrollen in an sich bekannter Weise in einem Rahmen gelagert, der um eine Achse schwenkbar ist, um das Gehäuse 6 zu öffnen und einen fertigen Ballen 26 an die Ballenwickelvorrichtung 4 auszugeben.

Die Ballenwickelvorrichtung 4 umfasst einen Wickeltisch 15, der um eine quer zur Fahrtrichtung bzw. zur Schnittebene der Fig. 1 orientierte Achse 16 schwenkbar zwischen zwei Längsträgern 17 des Fahrgestells 1 aufgehängt ist. Von den beiden Längsträgern 17 ragt unmittelbar hinter der Presskammer 3 jeweils eine Säule 18 auf, und die beiden Säulen 18 sind an ihren oberen Enden durch einen in der Draufsicht U-förmigen Querbalken 19 verbunden. An dem Querbalken 19 ist mittig ein um eine vertikale Achse 20 drehbarer Bogen 21 aufgehängt. An den Enden des Bogens 21 ist jeweils ein Wickelbahnspender 22, hier in Form einer Vorratsrolle, angebracht, die, wenn ein Ballen auf dem Wickeltisch 15 liegt und der Bogen 21 um die Achse 20 gedreht wird, auf einer Kreisbahn um den Ballen umläuft, wobei eine Folienbahn 23 von der Vorratsrolle ab und um den Ballen herum gewickelt wird.

Der Wickeltisch 15 umfasst einen Rahmen mit zwei Seitenwandplatten 24, zwischen denen zwei Tragrollen 25 mit jeweils zur Achse 16 paralleler Drehachse aufgehängt sind. Die Tragrollen 25 sind drehantreibbar, um einen auf ihnen ruhenden Ballen 26 in Drehung um seine ebenfalls zur Achse 16 parallele Längsachse 27 zu versetzen.

An den beiden Seitenwänden 24 ist jeweils eine Klemmeinrichtung 28 angebracht, die zwei gelenkig verbundene, durch ein hydraulisches Stellglied angetriebene Klemmbalken 29, 30 umfasst. Einer nicht gezeichneten, einfachen Ausgestaltung zufolge ist einer der Klemmbalken an der Seitenwand 24 unbeweglich, und der andere ist zwischen einer Klemmstellung in Kontakt mit dem ortsfesten Klemmbalken und einer Fangstellung beweglich, in der er vom Wickeltisch 15 aus bis über die Oberkante der Folienbahn 23 aufragt. Fig. 1 zeigt eine kompaktere Ausgestaltung der Klemmeinrichtung 28, bei der beide Klemmbalken 29, 30 gekoppelt beweglich sind. Die Klemmbalken 29, 30 sind mit durchgezogenen Linien in der Klemmstellung sowie mit gestrichelten Linien, in der Fangstellung sowie in einer arretierbaren Zwischenstellung zwischen Fang- und Klemmstellung gezeigt.

Fig. 2 zeigt eine Draufsicht auf den Wickeltisch 15 mit dem darauf liegenden Ballen 26 sowie die Kreisbahn 31, auf der die beiden Wickelbahnspender 22 während des Umwickelns des Ballens 26 umlaufen. Die Umlaufrichtung ist im Uhrzeigersinn, ein Abschnitt der von jeweils einem der Spender 22 abgegebenen Folienbahn 23 hat sich soeben flach an eine Stirnseite 32 des Ballens 26 angelegt, und ein weiterer Abschnitt 33 der Folienbahn 23 erstreckt sich frei zwischen dem Wickelbahnspender 22 und einem zu ihm benachbarten Rand der Stirnseite 32.

In Fig. 3 sind die Wickelbahnspender 22 um ca. 90° im Uhrzeigersinn gegenüber der Fig. 2 weiterrotiert, so dass ein weiterer Abschnitt 34 der Folienbahn am Umfang des Ballens 26 anliegt und der frei zwischen dem Ballen 26 und dem Wickelbahnspender 22 gespannte Abschnitt 33 sich über der Seitenwand 24 erstreckt.

Die Klemmbalken 29, 30 befinden sich in der angehobenen Fangstellung der Fig. 1. In dieser Stellung kreuzt der (in der Draufsicht der Fig. 3 verborgene) untere Klemmbalken 29 eine horizontale Ebene 35 (s. Fig. 1), in der sich die Unterkante des Abschnitts 33 bewegt, und der Klemmbalken 30 eine horizontale Ebene 36, in der sich die Oberkante des Abschnitts 33 bewegt, so dass, wenn die Wickelbahnspender 22 auf der Kreisbahn 31 weiter umlaufen, der Wickelbahnabschnitt 33 sich jeweils außen an die Klemmbalken 29, 30 anschmiegt, so dass er von diesen mitgenommen und eingeklemmt wird, wenn die Klemmbalken 29, 30 wie in Fig. 4 gezeigt wieder die Klemmstellung an der Seitenwandplatte 24 einnehmen.

Es kann ein entlang der Klemmbalken bewegliches Messer vorgesehen sein, um in diesem Stadium die Folienbahn 23 zwischen der Klemmeinrichtung 28 und dem Ballen 26 zu durchtrennen, so dass der Ballen 26 von dem Wickeltisch 15 herunterrollen kann, wenn dieser um die Achse 16 aus der Horizontalstellung herausgeschwenkt wird. Alternativ kann aber auch einer der Klemmbalken 29, 30 mit einer scharfen, eventuell gezahnten Kante versehen sein, an der die Folienbahn 23 zwischen Klemmeinrichtung 28 und Ballen 26 reißt, wenn der Wickeltisch 15 zum Absetzen des Ballens 26 geschwenkt wird.

Fig. 5 zeigt den Wickeltisch 15 nach dem Absetzen des Ballens 26. Der zwischen den Klemmbalken 29, 30 geklemmte Teil der Folienbahn 23 bildet nun deren Ende.

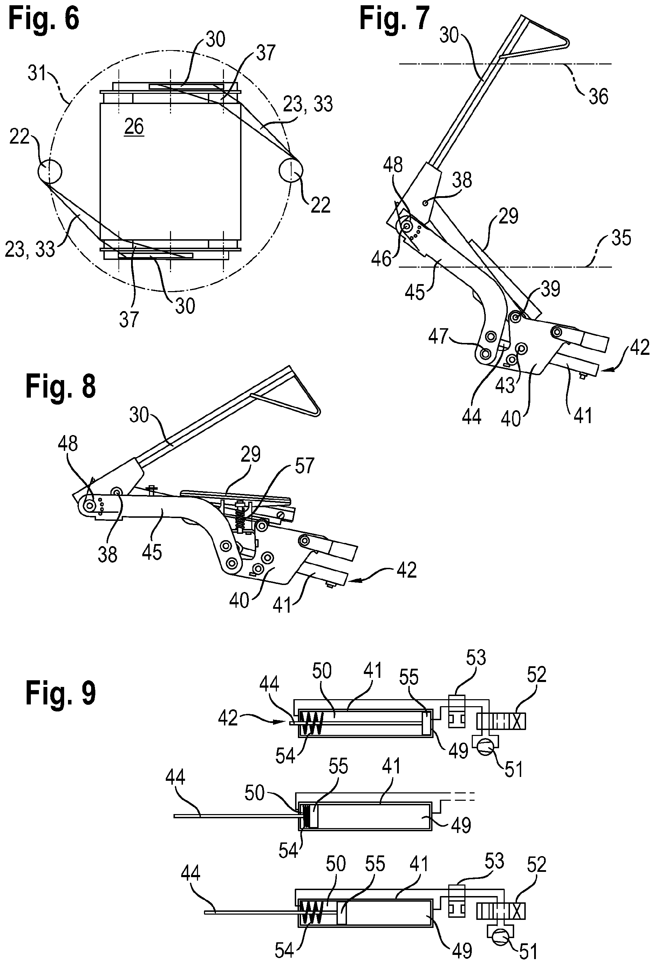

Wenn ein neuer Ballen 26 auf den Wickeltisch geladen wird, wie in Fig. 6 gezeigt, beginnen auch die Wickelbahnspender 22 wieder, im Uhrzeigersinn auf der Kreisbahn 31 umzulaufen, wobei zunächst ein Abschnitt 37 der Folienbahn zwischen der Klemmeinrichtung 28 und dem Rand der benachbarten Stirnseite 32 sich straff gespannt frei im Raum erstreckt. Damit die sich von den Spendern 22 abwickelnde Folienbahn 23 sich im Laufe der weiteren Bewegung der Spender 22 flach an die Stirnseite 32 des Ballens 26 anschmiegen kann, muss die Spannung im Abschnitt 37 durch Anheben des Klemmbalkens 30 aufgehoben werden. Einerseits sollte hierfür in kurzer Zeit der Klemmbalken 30 weit genug angehoben werden, um den Abschnitt 37 zuverlässig freizugeben, andererseits sollte ein Ausgreifen des Klemmbalkens 30 über die Ebene 35 hinaus nach oben vermieden oder zumindest auf eine so kurze Zeitspanne begrenzt werden, dass ein Kontakt des Klemmbalkens 30 mit dem sich zwischen Ballen 26 und Spender 22 erstreckenden Abschnitt 33 der Wickelbahn 23 sicher vermieden werden kann.

Die Figuren 7 und 8 zeigen ein Ausführungsbeispiel einer dafür geeigneten Klemmeinrichtung 28 in der Fangstellung bzw. in der Zwischenstellung zwischen Fang- und Klemmstellung. In der Fangstellung der Fig. 7 ragt der Klemmbalken 30 nach oben bis über die Ebene 36 hinaus. Der Klemmbalken 29 ist mit einer Schiene 56 beweglich verbunden, die über ein Gelenk 38 mit dem Klemmbalken 30 und über ein Gelenk 39 mit einem an der Seitenwand 24 des Wickeltischs 15 ortsfesten Träger 40 verbunden ist. Eine in Fig. 8 sichtbare Feder 57 greift an dem Klemmbalken 29 und der Schiene 56 an und treibt den Klemmbalken 29 von der Schiene 56 fort, in der Stellung der Fig. 8 nach oben. An dem Träger 40 ist ein Zylinder 41 eines hydraulischen Stellglieds 42 um eine Achse 43 schwenkbar aufgehängt, und eine Kolbenstange 44 des Stellglieds 42 greift an einem Arm 45 an, der über Gelenke 46, 47 einerseits mit dem Klemmbalken 30 und andererseits mit dem Träger 40 verbunden ist. Eine Feder 48, hier eine um die Achse des Gelenks 46 herum angeordnete Schraubenfeder, ist mit einem Ende am Klemmbalken 30 und mit dem anderen Ende am Arm 45 befestigt, um ein Drehmoment im Uhrzeigersinn auf den Klemmbalken 30 auszuüben.

In der in Fig. 7 gezeigten Fangstellung ist die Kolbenstange 44 bis zum Anschlag in den Zylinder 41 des Stellgliedes 42 eingezogen.

In der Klemmstellung ist die Kolbenstange des hydraulischen Stellgliedes 42 so weit ausgefahren, dass der Klemmbalken 30 den Klemmbalken 29 gegen den Träger 56 drückt und dabei die Feder 57 staucht. Der Klemmbalken 29 sollte dabei eine Anschlagstellung am Träger 56 noch nicht erreichen, so dass die Kraft, mit der die Wickelbahn in der Klemmstellung zwischen den Klemmbalken 29, 30 geklemmt ist, durch die Spannung der Feder 57 und dicht durch den Druck des Hydraulikfluids begrenzt ist, durch das das Stellglied angetrieben ist.

Fig. 9 zeigt im obersten seiner drei Diagramme das Stellglied 42 in der Fangstellung. Der doppelt wirkende Zylinder 41 hat zwei Arbeitskammern 49, 50. Das Volumen der Arbeitskammer 49 ist in der Fangstellung minimal, das der Arbeitskammer 50 maximal. In der Arbeitskammer 50 ist eine Feder 54 untergebracht; die Feder 54 ist entspannt und ohne Kontakt mit einem Kolben 55 des Stellglieds 42

Die Arbeitskammern 49, 50 sind mit einer Pumpe 51 über eine Anordnung von hier zwei Wegeventilen 52, 53 verbunden. Das Wegeventil 53 ist in einer Stellung gezeigt, in der es beide Arbeitskammern mit dem Ventil 52 verbindet, das Ventil 52 in einer Stellung, in der die Pumpe 51 in die Arbeitskammer 49 fördert und so die Kolbenstange 44 aus dem Zylinder 41 herausschiebt.

Wenn die Kolbenstange 44 ausgefahren wird, erreicht die Klemmeinrichtung 28 schließlich eine Klemmstellung, in der der Klemmbalken 30 gegen den Klemmbalken 29 drückt. In dieser Stellung ist die Feder 54 gestaucht, wie im mittleren Diagramm von Fig. 9 gezeigt, und auch die Feder 57 ist gestaucht.

Um einen in dieser Stellung zwischen den Klemmbalken 29, 30 geklemmten Abschnitt der Folienbahn freizugeben, genügt es, für kurze Zeit einen Druckausgleich zwischen den Arbeitskammern 49, 50 zuzulassen, indem das Wegeventil 53 in eine Stellung versetzt wird, in der es die Arbeitskammern 49, 50 miteinander verbindet. Dann genügt die Kraft der Federn 54, 57, um den Klemmbalken 30 in die Zwischenstellung anzuheben, in der die Folienbahn freigegeben ist.

Um sicherzustellen, dass der Klemmbalken 30 in der Zwischenstellung sicher fixiert ist und nicht bei der Fahrt auf unebener Feldfläche auf und ab wippt, wird bei Erreichen der Zwischenstellung, wie im unteren Teil von Fig. 9 gezeigt, das Wegeventil 52 wieder in die Ausgangsstellung zurückversetzt, in der es die Arbeitskammern 49, 50 mit dem Wegeventil 52 verbindet, und das Wegeventil 52 wird in eine Stellung geschaltet, in der beide Arbeitskammern 49, 50 von der Pumpe 51 abgekoppelt und dicht verschlossen sind.

Genauso wie der Klemmbalken 30 mit Unterstützung durch die Federn 54, 57 schnell von der Klemmstellung in die Zwischenstellung getrieben werden kann, indem in der Klemmstallung das Wegeventil 53 in die die Arbeitskammern 49, 50 miteinander verbindende Stellung versetzt wird, kann er auch schnell aus der Fangstellung eingeholt werden, wobei in letzterem Falle die in der Feder 48 gespeicherte Energie die Abwärtsbewegung des Klemmbalkens 30 antreibt.

### Bezugszeichen

- 1: Fahrgestell
- 2: Zerkleinerungseinrichtung
- 3: Presskammer
- 4: Ballenwickelvorrichtung
- 5: Lücke
- 6: Gehäuse
- 10: Pressrolle
- 15: Wickeltisch
- 16: Achse
- 17: Längsträger
- 18: Säule
- 19: Querbalken
- 20: Achse
- 21: Bogen
- 22: Wickelbahnspender
- 23: Folienbahn
- 24: Seitenwandplatte
- 25: Tragrolle
- 26: Ballen
- 27: Längsachse
- 28: Klemmeinrichtung
- 29: Klemmbalken
- 30: Klemmbalken
- 31: Kreisbahn
- 32: Stirnseite
- 33: Abschnitt der Folienbahn
- 34: Abschnitt
- 35: Ebene
- 36: Ebene
- 37: Abschnitt
- 38: Gelenk
- 39: Gelenk
- 40: Träger
- 41: Zylinder
- 42: Stellglied
- 43: Achse
- 44: Kolbenstange
- 45: Arm
- 46: Gelenk
- 47: Gelenk
- 48: Feder
- 49: Arbeitskammer
- 50: Arbeitskammer
- 51: Pumpe
- 52: Wegeventil
- 53: Wegeventil
- 54: Feder
- 55: Kolben
- 56: Schiene
- 57: Feder

## Patentansprüche

1. Wickelvorrichtung für eine Ballenpresse mit einem Wickeltisch (15), einem Wickelbahnspender (22), der auf einem um einen von dem Wickeltisch (15) getragenen Ballen (26) herum verlaufenden Weg (31) geführt ist, und einer Klemmeinrichtung (28) zum Fixieren der Wickelbahn (23), die einen ersten Klemmbalken (29) und einen zweiten Klemmbalken (30) umfasst, wobei der zweite Klemmbalken (30) zwischen einer ersten Anschlagstellung, in der er durch ein druckgetriebenes Stellglied (42) gegen den ersten Klemmbalken (29) beaufschlagt ist, und einer zweiten Anschlagstellung bewegbar ist, **dadurch gekennzeichnet, dass** in der ersten Anschlagstellung das Stellglied (42) drucklos schaltbar ist und der zweite Klemmbalken (30) in einer Zwischenstellung zwischen erster und zweiter Anschlagstellung arretierbar ist, wobei eine Ventilanordnung (52, 53) vorgesehen ist, die zwischen einer Konfiguration, in der eine erste Arbeitskammer (49) des Stellgliedes (42) mit einem Auslassanschluss einer Pumpe (51) und eine zweite Arbeitskammer (50) des Stellgliedes (42) mit einem Einlassanschluss der Pumpe (51) verbunden ist, einer Konfiguration, in der die Arbeitskammern (50, 51) miteinander verbunden und von wenigstens einem der Anschlüsse der Pumpe (51) getrennt sind, und einer Konfiguration umschaltbar ist, in der wenigstens eine der Arbeitskammern (50, 51) dicht verschlossen ist und das Stellglied dadurch arretiert ist.

2. Wickelvorrichtung nach Anspruch 1, **dadurch gekennzeichnet, dass** die Klemmeinrichtung (28) eine erste Feder (48) umfasst, die einer Bewegung des zweiten Klemmbalkens (30) in die zweite Anschlagstellung eine erste Rückstellkraft entgegensetzt.

3. Wickelvorrichtung nach Anspruch 1 oder 2, **dadurch gekennzeichnet, dass** die zweite Anschlagstellung eine Fangstellung ist, in der der zweite Klemmbalken (30) in einen Zwischenraum zwischen dem Weg (31) des Wickelbahnspenders (22) und dem Ballen (26) eingreift.

4. Wickelvorrichtung nach Anspruch 3, **dadurch gekennzeichnet, dass** der Zwischenraum durch zwei Ebenen (35. 36) begrenzt ist, in denen zwei entgegengesetzte Ränder der Wickelbahn (23) während des Umwickelns des Ballens (26) umlaufen und dass die Klemmbalken (29, 30) sich in der Fangstellung über den gesamten Zwischenraum zwischen den zwei Ebenen (35, 36) erstrecken.

5. Wickelvorrichtung nach einem der vorhergehenden Ansprüche, **gekennzeichnet durch** eine zweite Feder (54) zum Erzeugen einer zweiten Rückstellkraft, die wenigstens den zweiten Klemmbalken (30) aus der ersten Anschlagstellung heraus beaufschlägt.

6. Wickelvorrichtung nach Anspruch 5, **dadurch gekennzeichnet, dass** bei drucklosem Stellglied (42) die Klemmeinrichtung (28) durch die Federn (48, 54) in einer Gleichgewichtsstellung zwischen der ersten und der zweiten Anschlagstellung gehalten ist, in der die Klemmbalken (29, 30) sich außerhalb des Zwischenraums befinden.

7. Wickelvorrichtung nach Anspruch 6, **dadurch gekennzeichnet, dass** die zweite Feder (54) eine höhere Federkonstante als die erste Feder (48) hat.

8. Wickelvorrichtung nach Anspruch 6 oder 7, **dadurch gekennzeichnet, dass** die zweite Feder (54) im Stellglied (42) untergebracht ist.

9. Wickelvorrichtung nach Anspruch 7 oder 8, **dadurch gekennzeichnet, dass** die erste Feder (48) einen längeren Hub als die zweite Feder (54) hat.

10. Wickelvorrichtung nach einem der vorhergehenden Ansprüche, **dadurch gekennzeichnet, dass** eine dritte Feder (57) am ersten Klemmbalken (29) angreift und dass in der ersten Anschlagstellung der erste Klemmbalken (29) entgegen einer Rückstellkraft der dritten Feder (57) ausgelenkt ist.

11. Verfahren zum Betreiben einer Wickelvorrichtung für eine Ballenpresse mit einem Wickeltisch (15), einem Wickelbahnspender (22) und einer Klemmeinrichtung (28) zum Fixieren der Wickelbahn (23), die einen ersten Klemmbalken (29) und einen durch ein druckgetriebenes Stellglied (42) angetriebenen zweiten Klemmbalken (30) umfasst, mit den Schritten
a) Platzieren eines Ballens (26) auf dem Wickeltisch (15) ;
b) Fixieren eines Endes einer Wickelbahn (23) zwischen erstem und zweitem Klemmbalken (29, 30) der Klemmeinrichtung (28);
c) Führen des Wickelbahnspenders (22) auf einem um den Ballen (26) herum verlaufenden Weg (31), um ein Stück der Wickelbahn (23) um den Ballen (26) zu wickeln;
d) drucklos Schalten des Stellgliedes (42), um eine Bewegung des zweiten Klemmbalkens (30) in eine Zwischenstellung zwischen erster und zweiter Anschlagstellung freizugeben,
**gekennzeichnet durch**: e) Arretieren des zweiten Klemmbalkens (30) in der Zwischenstellung indem wenigstens eine von zwei Arbeitskammern (50, 51) des Stellgliedes (42) dicht verschlossen wird und das Stellglied dadurch arretiert ist.

12. Verfahren nach Anspruch 11, **dadurch gekennzeichnet, dass** in Schritt e) der zweite Klemmbalken (30) in der Zwischenstellung durch Federn arretiert wird.

## Claims

1. Wrapping device for a baler, having a wrapping table (15), a wrap dispenser (22), which is guided over a path (31) which runs around a bale (26) supported on the wrapping table (15), and a clamping device (28) for fixing the wrap (23) which comprises a first clamping bar (29) and a second clamping bar (30), wherein the second clamping bar (30) is movable between a first limiting stop position in which it is urged against the first clamping bar (29) by means of a pressure-operated actuator (42), and a second limiting stop position, **characterized in that** in the first limiting stop position, the actuator (42) can be switched in an unpressurized manner and the second clamping bar (30) can be halted in an intermediate position between the first and second limiting stop position, wherein a valve arrangement (52, 53) is provided which can be switched around between a configuration in which a first working chamber (49) of the actuator (42) is connected to an outlet connection of a pump (51) and a second working chamber (50) of the actuator (42) is connected to an inlet connection of the pump (51), a configuration in which the working chambers (50, 51) are connected together and separated from at least one of the connections for the pump (51), and a configuration in which at least one of the working chambers (50, 51) is tightly closed and the actuator is therefore halted.

2. The wrapping device as claimed in claim 1, **characterized in that** the clamping device (28) comprises a first spring (48) which opposes a movement of the second clamping bar (30) into the second limiting stop position by means of a first restoring force.

3. The wrapping device as claimed in claim 1 or claim 2, **characterized in that** the second limiting stop position is a capture position in which the second clamping bar (30) engages in a gap between the path (31) of the wrap dispenser (22) and the bale (26).

4. The wrapping device as claimed in claim 3, **characterized in that** the gap is delimited by two planes (35, 36) in which two opposing edges of the wrap (23) run during wrapping of the bale (26) and **in that** in the capture position, the clamping bars (29, 30) extend over the entire gap between the two planes (35, 36).

5. The wrapping device as claimed in one of the preceding claims, **characterized by** a second spring (54) for producing a second restoring force which urges at least the second clamping bar (30) out of the first limiting stop position.

6. The wrapping device as claimed in claim 5, **characterized in that** when the actuator (42) is unpressurized, the clamping device (28) is retained by the springs (48, 54) in an equilibrium position between the first and the second limiting stop positions, in which the clamping bars (29, 30) are located outside the gap.

7. The wrapping device as claimed in claim 6, **characterized in that** the second spring (54) has a higher spring constant than the first spring (48).

8. The wrapping device as claimed in claim 6 or claim 7, **characterized in that** the second spring (54) is accommodated in the actuator (42).

9. The wrapping device as claimed in claim 7 or claim 8, **characterized in that** the first spring (48) has a longer travel than the second spring (54).

10. The wrapping device as claimed in one of the preceding claims, **characterized in that** a third spring (57) engages with the first clamping bar (29) and **in that** in the first limiting stop position, the first clamping bar (29) is deflected against a restoring force of the third spring (57).

11. A method for operating wrapping device for a baler having a wrapping table (15), a wrap dispenser (22) and a clamping device (28) for fixing the wrap (23), which comprises a first clamping bar (29) and a second clamping bar (30) driven by a pressure-operated actuator (42), having the steps of:
a) placing a bale (26) on the wrapping table (15);
b) fixing one end of a wrap (23) between first and second clamping bars (29, 30) of the clamping device (28);
c) guiding the wrap dispenser (22) over a path (31) which runs around the bale (26) in order to wind a piece of the wrap (23) around the bale (26);
d) unpressurized switching of the actuator (42) in order to enable a movement of the second clamping bar (30) into an intermediate position between first and second limiting stop positions,
**characterized by**:
e) halting the second clamping bar (30) in the intermediate position in which at least one of two working chambers (50, 51) of the actuator (42) is tightly closed and the actuator is therefore halted.

12. The method as claimed in claim 11, **characterized in that** in step e), the second clamping bar (30) is halted in the intermediate position by means of springs.

## Revendications

1. Dispositif d'enrubannage pour une presse à balles comprenant une table d'enrubannage (15), un distributeur de film d'enrubannage (22) qui est guidé sur une trajectoire (31) tournant autour d'une balle (26) portée par la table d'enrubannage (15), et un équipement de retenue (28) pour bloquer le film d'enrubannage (23), lequel comprend une première barre de retenue (29) et une seconde barre de retenue (30), la seconde barre de retenue (30) étant déplaçable entre une première position de butée, dans laquelle elle est sollicitée par l'intermédiaire d'un actionneur commandé par pression (42) contre la première barre de retenue (29), et une seconde position de butée, **caractérisé en ce que**, dans la première position de butée, l'actionneur (42) est mis hors pression et la seconde barre de retenue (30) est immobilisable entre les première et seconde positions de butée, un agencement de valves (52, 53) étant prévu, lequel est commutable entre une configuration dans laquelle une première chambre de travail (49) de l'actionneur (42) est reliée à un raccord de sortie de la pompe (51) et une seconde chambre de travail (50) de l'actionneur (42) est reliée à un raccord d'entrée de la pompe (51), une configuration dans laquelle les chambres de travail (50, 51) sont reliées entre elles et sont séparées d'au moins un des raccords de la pompe (51), et une configuration dans laquelle au moins une des chambres de travail (50, 51) est fermée de manière étanche et, de ce fait, l'actionneur est immobilisé.

2. Dispositif d'enrubannage selon la revendication 1, **caractérisé en ce que** l'équipement de retenue (28) comprend un premier ressort (48) qui oppose une première force de rappel à un déplacement de la seconde barre de retenue (30) vers la seconde position de butée.

3. Dispositif d'enrubannage selon la revendication 1 ou 2, **caractérisé en ce que** la seconde position de butée est une position d'interception dans laquelle la seconde barre de retenue (30) pénètre dans un intervalle entre la trajectoire (31) du distributeur de film d'enrubannage (22) et la balle (26).

4. Dispositif d'enrubannage selon la revendication 3, **caractérisé en ce que** l'intervalle est limité par deux plans (35, 36) dans lesquels deux bords opposés du film d'enrubannage (23) tournent pendant l'enrubannage de la balle (26) et **en ce que**, dans la position d'interception, les barres de retenue (29, 30) s'étendent sur la totalité de l'intervalle entre les deux plans (35, 36).

5. Dispositif d'enrubannage selon une des revendications précédentes, **caractérisé par** un second ressort (54) pour produire une seconde force de rappel qui sollicite au moins la seconde barre de retenue (30) à quitter la première position de butée.

6. Dispositif d'enrubannage selon la revendication 5, **caractérisé en ce que**, lorsque l'actionneur (42) est hors pression, l'équipement de retenue (28) est maintenu par les ressorts (48, 54) dans une position d'équilibre entre la première et la seconde position de butée, dans laquelle les barres de retenue (29, 30) se trouvent à l'extérieur de l'intervalle.

7. Dispositif d'enrubannage selon la revendication 6, **caractérisé en ce que** le second ressort (54) possède une constante élastique supérieure à celle du premier ressort (48).

8. Dispositif d'enrubannage selon la revendication 6 ou 7, **caractérisé en ce que** le second ressort (54) est logé dans l'actionneur (42).

9. Dispositif d'enrubannage selon la revendication 7 ou 8, **caractérisé en ce que** le premier ressort (48) possède une course supérieure à celle du second ressort (54).

10. Dispositif d'enrubannage selon une des revendications précédentes, **caractérisé en ce qu'**un troisième ressort (57) agit sur la première barre de retenue (29) et **en ce que**, dans la première position de butée, la première barre de retenue (29) est déviée à l'encontre d'une force de rappel du troisième ressort (57).

11. Procédé de fonctionnement d'un dispositif d'enrubannage pour une presse à balles comprenant une table d'enrubannage (15), un distributeur de film d'enrubannage (22) et un équipement de retenue (28) pour bloquer le film d'enrubannage (23), lequel comprend une première barre de retenue (29) et une seconde barre de retenue (30) entraînée par l'intermédiaire d'un actionneur commandé par pression (42), comprenant les étapes consistant à
a) placer une balle (26) sur la table d'enrubannage (15) ;
b) bloquer une extrémité d'un film d'enrubannage (23) entre les première et seconde barres de retenue (29, 30) de l'équipement de retenue (28) ;
c) guider le distributeur de film d'enrubannage (22) sur une trajectoire (31) tournant autour de la balle (26) pour enrouler un morceau du film d'enrubannage (23) autour de la balle (26) ;
d) mettre l'actionneur (42) hors pression pour autoriser un déplacement de la seconde barre de retenue (30) vers une position intermédiaire entre les première et seconde positions de butée,
**caractérisé en ce qu'**il consiste à :
e) immobiliser la seconde barre de retenue (30) dans la position intermédiaire en fermant de manière étanche au moins une de deux chambres de travail (50, 51) de l'actionneur (42) et en immobilisant ainsi l'actionneur.

12. Procédé selon la revendication 11, **caractérisé en ce qu'**à l'étape e), la seconde barre de retenue (30) est immobilisée dans la position intermédiaire par des ressorts.
